Europäisches Patentamt

European Patent Office

Office européen des brevets

(19)

(11)  EP 0 844 297 B1

(12)  EUROPEAN PATENT SPECIFICATION

(45) Date of publication and mention
     of the grant of the patent:
     **01.08.2001  Bulletin 2001/31**

(51) Int Cl.⁷: **C10J 3/66**, C10J 3/16,
     C03C 1/02, C03C 25/00

(21) Application number: **98101566.2**

(22) Date of filing: **18.10.1994**

(54) **Process for the gasification of glass fiber reinforced plastics, and apparatus**

Verfahren zur Vergasung von glasfaserverstärkten Kunststoffen und Vorrichtung

Procédé pour la gazéification de matières plastiques renforcées de fibres de verre et appareillage

(84) Designated Contracting States:
     **DE FR**

(30) Priority: **19.10.1993  JP 26087393**
              **19.10.1993  JP 26087293**

(43) Date of publication of application:
     **27.05.1998  Bulletin 1998/22**

(62) Document number(s) of the earlier application(s) in
     accordance with Art. 76 EPC:
     **94116402.2 / 0 648 829**

(73) Proprietor: **MITSUBISHI JUKOGYO KABUSHIKI
     KAISHA
     Tokyo (JP)**

(72) Inventors:
  • **Takeuchi, Yoshiyuki, Mitsubishi Jukogyo K.K.
    Nishi-ku, Hiroshima-shi, Hiroshima-ken (JP)**
  • **Tamura, Tadaaki Mitsubishi Jukogyo K.K.
    Nishi-ku, Hiroshima-shi, Hiroshima-ken (JP)**

  • **Sakai, Masayasu Mitsubishi Jukogyo K.K.
    Nishi-ku, Hiroshima-shi, Hiroshima-ken (JP)**
  • **Harada, Takayuki, Mitsubishi Jukogyo K.K.
    Shimonoseki-shi, Yamaguchi-ken (JP)**
  • **Fujiwara, Kunihisa, Mitsubishi Jukogyo K.K.
    Nishi-ku, Hiroshima-shi, Hiroshima-ken (JP)**
  • **Hashimoto, Ritsuo Mitsubishi Jukogyo K.K.
    Nishi-ku, Hiroshima-shi, Hiroshima-ken (JP)**
  • **Horizoe, Hirotoshi Mitsubishi Jukogyo K.K.
    Nishi-ku, Hiroshima-shi, Hiroshima-ken (JP)**

(74) Representative: **Behrens, Dieter, Dr.-Ing.
     Wuesthoff & Wuesthoff
     Patent- und Rechtsanwälte
     Schweigerstrasse 2
     81541 München (DE)**

(56) References cited:
     **EP-A- 0 545 241          EP-A- 0 563 777**
     **US-A- 3 847 664          US-A- 5 019 171**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The invention relates to a process and an apparatus for effectively utilizing glass fiber reinforced plastic (GFRP) waste by the gasification thereof. More particularly, it relates to a process and an apparatus for gasifying GFRP waste to produce a gas utilizable as a synthesis gas.

Conventionally, organic materials including wood, farm products (such as sugar-cane and corn), common plants (such as algae and weeds) and the like have been gasified. Moreover, techniques for the gasification of waste products consisting largely of organic materials have recently been developed for the purpose of processing industrial waste including plastics, waster paper, so-called shredder dust obtained by crushing plastics in scrapped automobiles, scrapped FRP boats composed mainly of thermoset resin, and the like.

Generally, conventional processes for the gasification of such organic materials have been carried out in a single-stage pyrolysis or combustion furnace of the moving bed or fluidized bed type using air or oxygen, for the main purpose of recovering waste heat. Recently, processes for thermally decomposing plastics-containing waste in a single-stage pyrolysis furnace to recover its oil content are also being developed.

US-A-3,847,664 describes a process for removing organic binder material from glass fibers, wherein the organic binder is gasified by contacting it with a gas containing oxygen and aqueous vapour at a temperature below the incipient fusion temperature of the glass.

EP-A-0 153 235 relates to a two-step process for gasifying an organic material, wherein in a first step the organic material is contacted with oxygen and aqueous vapour at a temperature of 700 to 800°C, and in a second step the gases produced in the first reactor are converted at a temperature of 1,300 to 1,500°C.

Each of the above-described conventional processes involves the following problems.

(a) Plastics: Since a plurality of materials are mixed together, the pyrolysis temperature varies widely, from about 300°C to 800°C, thus making the operation difficult. Moreover, the formation of soot due to undecomposed carbon and the deposition of coking products on the walls of the apparatus are problematic.

(b) Especially in the case of plastics, their combustion produces high temperatures exceeding about 1,200°C and hence tends to cause damage to the walls of the combustion furnace.

(c) The plastic component of GFRP tends to undergo coking because the inside of the GFRP is heated to a high temperature as a result of its combustion reaction with oxygen and the rapid oxygen consumption causes a shortage of oxygen, thus making it difficult to gasify the plastic component completely. Consequently, it is impossible to isolate the glass fibers and utilize them effectively.

In view of the above-described technological level of the art, it is an object of the invention as defined in appended claims 1 and 2 to provide a process and apparatus for gasifying the plastic component of GFRP, withdrawing the remaining glass fibers, and recovering useful components from the plastic gas produced by the gasification of the plastic component.

According to the invention, the GFRP material is processed as follows:

In the first step of the claimed process, the GFRP material is fed to a gasification section where it is heated to a temperature of 650 to 750°C in the presence of oxygen and steam. Thus, only the plastic component of the GFRP material is gasified completely. It is conceivable to use oxygen alone during this gasification, but this may produce high temperatures locally. Consequently, oxygen diluted with steam is used to ensure complete gasification. The gasification conditions in this first step are preferably such that the ratio of oxygen to GFRP is in the range of 0.09 to 0.50 N liter of oxygen per gram of GFRP and the ratio of steam to GFRP is not less than 2.0 grams of steam per gram of GFRP. The gas produced in the first step comprises CO, $CO_2$, $H_2$, $O_2$, methane, ethane, propane, and other hydrocarbon compounds having a boiling point ranging from room temperature to about 750°C. This gas will hereinafter be referred to as the plastic gas. Since the glass fibers have a melting point of about 830°C, they remain intact in the first step and are recovered in solid form.

In the succeeding second step, the plastic gas from which the glass fibers were separated is transferred to a plastic gas decomposition section where it is partially oxidized in the presence of additional oxygen or an additional mixture of oxygen and steam. The combustion conditions in the second step are preferably such that, when the amount of the plastic gas is expressed in terms of the GFRP material, the ratio of oxygen to GFRP is in the range of 0.11 to 0.71 N liter of oxygen per gram of GFRP depending on the amount of oxygen used in the first step and, when steam is fed together with oxygen, the ratio of steam to GFRP is not less than 3.0 grams of steam per gram of GFRP. Then, the gas leaving the plastic gas decomposition section is transferred to a gas purification column where it is purified for use as a synthesis gas.

The invention will become more fully understood from the detailed description given hereinbelow and the accompanying drawings which are given by way of illustration only, and thus are not limitative of the invention and wherein:

Fig. 1   is a flow diagram illustrating the process for the gasification of GFRP in accordance with the invention; and
Fig. 2   is a schematic view illustrating the apparatus for the gasification of GFRP in accordance with the invention.

The effects which can be achieved by the invention are explained hereinbelow with reference to the following Testing Examples 1-2.

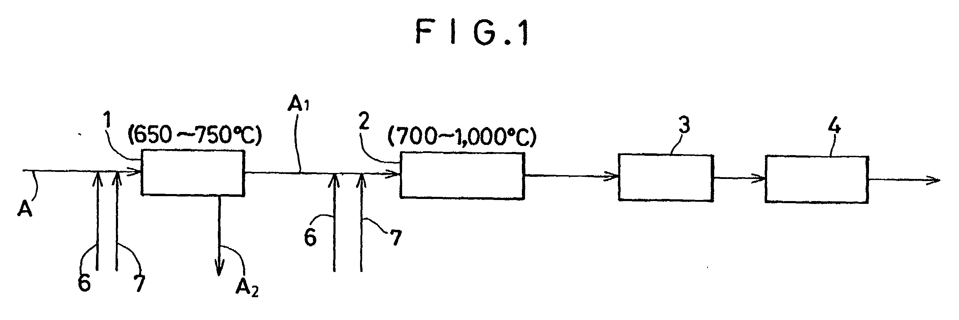

Now, the process in accordance with the invention will be described hereinbelow with reference to Fig. 1, which is a flow diagram illustrating the process for the gasification of GFRP.

As shown, this process involves a gasification section 1, a plastic gas decomposition section 2 connected to gasification section 1, a heat recovery section 3 and a gas purification section 4. In gasification section 1, a first step is carried out in which a GFRP material A that has previously been crushed to pieces is fed and heated in the presence of oxygen 7 and steam 6 to gasify the plastic component of the GFRP and thereby produce a plastic gas $A_1$, and the remaining solid glass fibers $A_2$ are recovered. In plastic gas decomposition section 2, a second step is carried out in which the plastic gas $A_1$ produced in the first step is introduced and partially oxidized in the presence of additional oxygen 7 and, if necessary, additional steam 6, and the CO and $H_2$ so produced are recovered.

Next, the steps of this gasification process are more specifically explained in the following. A GFRP material A that has previously been crushed to pieces is fed a gasification furnace (gasification section) 1 where it is heated to a temperature of 650 to 750°C in the presence of oxygen 7 and steam 6 supplied in a sufficient amount to adjust the oxygen partial pressure to 10-15% or less. Thus, the plastic constituting a component of GFRP material A is gasified without forming soot or coking products. The glass fibers $A_2$ (with a melting point of about 830°C) present in the GFRP remain in gasification furnace 1 and are recovered through the discharge orifice thereof (first step).

On the other hand, the plastic gas $A_1$ produced in the first step is introduced into a plastic gas decomposition furnace (plastic gas decomposition section) 2 where additional oxygen 7 and, if necessary, a sufficient amount of additional steam 6 to adjust the local oxygen partial pressure to 10-15% or less are supplied to plastic gas $A_1$. As a result, a portion of plastic gas $A_1$ undergoes the following reaction to produce useful component gases (CO and $H_2$) without forming soot or coking products.

$$CH + 1/2\, O_2 \rightarrow CO + 1/2\, H_2 + Q/2$$

where CH represents the plastic gas. Moreover, the remainder of plastic gas $A_1$ is further heated to a temperature of 700 to 1,000°C by the heat Q generated during this reaction and undergoes the following endothermic reaction in the presence of the supplied steam 6.

$$CH + H_2O \rightarrow CO + 3/2\, H_2 \text{ (endothermic reaction)}$$

This endothermic reaction produces highly concentrated useful component gases (CO and $H_2$) while preventing local heating to high temperatures and thereby suppressing soot formation and coking. The CO and $H_2$ so produced are passed through heat recovery section 3, purified in gas purification column 4, and then recovered by suitable means (second step).

These CO and $H_2$ can be utilized as fuel or in methanol synthesis. Since heat absorption takes place during the above-described reactions, the reactions can be allowed to proceed gently by regulating the amount of steam 6 supplied. Thus, highly concentrated CO and $H_2$ can be efficiently produced at a proper temperature.

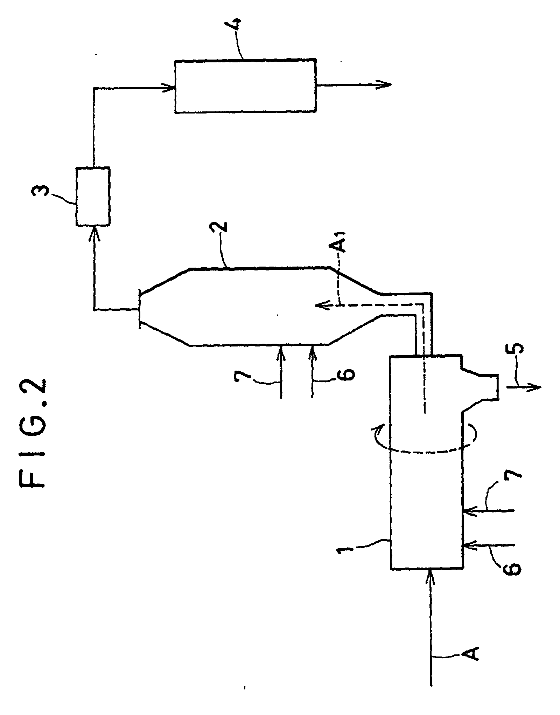

Now, the apparatus in accordance with the invention will be described hereinbelow with reference to Fig. 2, which is a schematic view illustrating the construction of the apparatus for the gasification of GFRP.

As shown, the apparatus is composed of a gasification furnace (or kiln) 1 consisting of a horizontally disposed rotatable cylindrical structure, a plastic gas decomposition furnace 2 connected to gasification furnace 1, a heat recovery unit 3 and a gas purification column 4.

Gasification furnace 1 has a heating zone for receiving a GFRP material A previously crushed to pieces and heating it in the presence of oxygen 7 and steam 6 to gasify the plastic component of the GFRP and thereby produce a plastic gas $A_1$ and a recovery zone for recovering the glass fibers $A_2$ remaining after the gasification of the plastic through a discharge orifice 5. Plastic gas decomposition furnace 2 consists of a cylindrical or boxlike structure connected to the above-described gasification furnace 1 and disposed vertically, in which the plastic gas $A_1$ introduced from gasification furnace 1 is partially oxidized in the presence of additional oxygen 7 and, if necessary, additional steam 6. Heat recovery unit 3 is a device for recovering heat from the gas produced in plastic gas decomposition furnace 2, and the gas cooled in heat recovery unit 3 is purified in gas purification column 4.

Next, the procedure for gasification using this gasification apparatus is described in greater detail.

First of all, a GFRP material A that has previously been crushed to pieces is fed to a rotating gasification furnace 1. In gasification furnace 1, GFRP material A is heated to a temperature of 650 to 750°C in the presence of oxygen 7 and steam 6. Thus, the plastic constituting a component of the GFRP is gasified to produce a plastic gas $A_1$. The glass fibers (with a melting point of about 830°C) present in the GFRP remain in gasification furnace 1, move forward with the rotation of gasification furnace 1, and are recovered through a discharge orifice 5.

On the other hand, plastic gas $A_1$ is introduced into a plastic gas decomposition furnace 2. To this decomposition furnace 2 are supplied additional oxygen 7 and, if necessary, an appropriate amount of additional steam 6. As a result, a portion of plastic gas $A_1$ undergoes the following reaction:

$$CH + 3/2\ O_2 \rightarrow CO_2 + 1/2\ H_2O + Q$$

Thus, the portion of plastic gas $A_1$ is oxidized (or burned) at a temperature of about 700 to 1,000°C to generate heat Q. The resulting gas is introduced into a heat recovery unit 3 where heat Q is recovered.

In the presence of additional oxygen 7 and, if necessary, an appropriate amount of additional steam 6, another portion of plastic gas $A_1$ undergoes the following reaction to produce CO and H2.

$$CH + 1/2\ O_2 \rightarrow CO + 1/2\ H_2 + Q/2$$

Moreover, the remainder of plastic gas $A_1$ is heated to a temperature of 700 to 1,000°C by the generated heat Q and undergoes the following reaction in the presence of additional steam 6 to produce highly concentrated useful component gases (CO and $H_2$).

$$CH + H_2O \rightarrow CO + 3/2\ H_2$$

The CO and $H_2$ so produced, together with other combustion gases, are introduced into heat recovery unit 3 where they are cooled to recover the heat. Then, they are introduced into a gas purification column 4 where harmful materials such as $SO_2$ and HCl are absorbed and separated. The CO and $H_2$ so purified are recovered and utilized as fuel or in methanol synthesis.

As described above, heat absorption takes place as a result of the combined use of oxygen 7 and steam 6 in gasification furnace 1 and plastic gas decomposition furnace 2. Accordingly, by properly regulating the amount of steam 6 and thereby allowing the reactions to proceed gently, the gasification of GFRP can be effected at a proper temperature to recover the glass fibers and the generated heat efficiently. Moreover, highly concentrated CO and $H_2$ can be efficiently produced at a proper temperature.

Now, the effects produced by the invention will be demonstrated by the following Testing Examples 1 and 2.

Testing Example 1

A GFRP for use in boats having the analytical values given below was cut into about 5 mm cubes and this GFRP material A was gasified according to the flow diagram of Fig. 1. The resulting gas was subjected to heat recovery and then purified to obtain a synthesis gas. Both gasification section 1 and plastic gas decomposition section 2 comprised quartz tubes having an inner diameter of 5 cm, and the overall length of these quartz tubes was fixed at 2 m. The temperature of gasification section 1 could be varied between 600°C and 900°C, and the temperature of plastic gas decomposition section 2 between 600°C and 1,000°C. GFRP material A was fed to gasification section 1 at a constant rate of 0.5 g/min.

(Analytical values of GFRP)
C: 50.4 wt.%
H: 4.4 wt.%
0: 7.5 wt.%
Water: 0.0 wt.%
Ash (including glass fibers): 37.7 wt.%

The operating conditions of gasification section 1 and plastic gas decomposition section 2 were set as shown in Table 1. Quartz wool or a filter was disposed at the inlet of heat recovery unit 3 to collect any soot or tar in the product gas. After a predetermined testing time (about 35 minutes), the glass fibers were removed, examined by visual observation, and analyzed for unburned carbon. The results thus obtained are shown in Table 1.

## Table 1

| Run No. | First step (gasification section) | | | | Second step (plastic gas decomposition section | | | *Rate of Gasification (wt%) |
|---|---|---|---|---|---|---|---|---|
| | Feed rate of GFRP (g/min) | Temp. (°C) | Oxygen (l/min) | Steam (g/min) | Temp. (°C) | Oxygen (l/min) | Steam (g/min) | |
| 1 | 0.5 | 600 | 0.12 | 2.0 | 1,00 | 0.13 | 0.5 | 86 |
| 2 | 0.5 | 650 | 0.12 | 2.0 | 1,000 | 0.13 | 0.5 | 99 |
| 3 | 0.5 | 700 | 0.12 | 2.0 | 700 | 0.13 | 0.5 | 99 |
| 4 | 0.5 | 700 | 0.12 | 2.0 | 850 | 0.13 | 0.5 | 100 |
| 5 | 0.5 | 700 | 0.12 | 2.0 | 1,000 | 0.13 | 0.5 | 100 |
| 6 | 0.5 | 700 | 0.12 | 2.0 | 1,000 | 0.13 | 0.0 | 98 |
| 7 | 0.5 | 700 | 0.12 | 2.0 | 1,000 | 0.0 | 0.0 | 75 |
| 8 | 0.5 | 700 | 0.12 | 2.0 | 1,100 | 0.0 | 0.0 | 70 |
| 9 | 0.5 | 750 | 0.12 | 2.0 | 1,000 | 0.13 | 0.5 | 99 |
| 10 | 0.5 | 800 | 0.12 | 2.0 | 1,000 | 0.13 | 0.5 | 85 |
| 11 | 0.5 | 900 | 0.12 | 2.0 | 1,000 | 0.13 | 0.5 | 83 |
| 12 | 0.5 | 1,000 | 0.12 | 2.0 | 1,000 | 0.13 | 0.5 | 83 |
| 13 | 0.5 | 700 | 0.12 | 0.0 | 1,000 | 0.13 | 0.5 | 86 |
| 14 | 0.5 | 700 | 0.0 | 0.0 | 1,000 | 0.13 | 0.5 | 69 |
| 15 | 0.5 | 700 | 0.0 | 2.0 | 1,000 | 0.13 | 0.5 | 70 |

Table 1 (Continuation)

| Run No. | Composition of product gas (vol.%) | | | Coking products or unburned components in glass fibers 0 : Absent X : Present | Tar or soot in product gas Δ : some 0 : None X : Present | Overall evaluation |
|---|---|---|---|---|---|---|
| | H₂ | CO | CO₂ | | | |
| 1 | 1 | 66 | 33 | x | 0 | x |
| 2 | 3 | 64 | 33 | 0 | 0 | 0 |
| 3 | 5 | 60 | 35 | 0 | 0 | 0 |
| 4 | 20 | 50 | 30 | 0 | 0 | 0 |
| 5 | 40 | 25 | 35 | 0 | 0 | 0 |
| 6 | 39 | 24 | 37 | 0 | Δ | 0 |
| 7 | 42 | 40 | 18 | 0 | x | x |
| 8 | 60 | 22 | 18 | 0 | 0 | 0 |
| 9 | 42 | 25 | 33 | 0 | 0 | 0 |
| 10 | 44 | 24 | 32 | x | x | x |
| 11 | 46 | 22 | 32 | x | x | x |
| 12 | 47 | 21 | 32 | x | x | x |
| 13 | 43 | 41 | 16 | x | x | x |
| 14 | 41 | 41 | 18 | x | x | x |
| 15 | 41 | 44 | 15 | x | x | x |

(*)The percentage of the carbon in the GFRP material which was converted into CO and CO₂

Testing Example 2

An example of the apparatus for the gasification of GFRP in accordance with the invention is presented. This apparatus has the same construction as that illustrated in Fig. 2. The specifications of several components of this apparatus, its operating conditions, and the results of operation are given below. The GFRP material used was the same as that described in Testing Example 1.

(Specifications)

Gasification furnace 1: 150 mm (diameter) x 500 mm (length)
Rotational speed of gasification furnace 1: 6 rpm
Plastic gas decomposition furnace 2: 200 mm (diameter) x 1,500 mm (length)

(Operating conditions)

Temperature of gasification furnace 1: 710°C
Amount of steam supplied to gasification furnace 1: 4.4 $Nm^3$/h
Amount of oxygen supplied to gasification furnace 1: 0.9 $Nm^3$/h
Temperature of plastic gas decomposition furnace 2: 985°C
Amount of oxygen supplied to plastic gas decomposition furnace 2: 1.0 $Nm^3$/h

(Results of operation)

Flow rate of product gas: 15.3 $Nm^3$/h
Composition of product gas (vol.%): $H_2$ = 38.0, CO = 41.0, $CO_2$ = 21.0 (The $H_2$ and CO concentrations are so high that the product gas can be satisfactorily used as a gas for the production of methanol.)
Rate of gasification (i.e., the percentage of the carbon in GFRP which was converted into CO and $CO_2$): 100%
Residue: Only white glass fibers containing no unreacted carbon components or coking products (continuously recovered).

Thus, according to the invention, a GFRP material is gasified in a gasification section (or gasification furnace) in the presence of oxygen and an appropriate amount of steam, so that only the plastic component of the GFRP is gasified and the remaining glass fibers can be recovered. Then, the resulting plastic gas is decomposed in a plastic gas decomposition section (or plastic gas decomposition furnace) under mild conditions, so that a synthesis can be obtained without causing damage to the walls of the furnace owing to high-temperature combustion as was usual with the prior art.

**Claims**

1. A process for the gasification of glass fiber reinforced plastics which comprises the first step of feeding a glass fiber reinforced plastic material to a gasification section, heating the material to a temperature of 650 to 750°C in the presence of oxygen and steam to gasify the plastic component thereof, and recovering the remaining glass fibers; and the second step of introducing the resulting plastic gas into a plastic gas decomposition section, partially oxidizing the plastic gas in the presence of additional oxygen or an additional mixture of oxygen and steam, and recovering the CO and $H_2$ so produced.

2. An apparatus for the gasification of glass fiber reinforced plastics which comprises a gasification furnace (1) consisting of a horizontally disposed rotatable cylindrical structure and having a heating zone for heating a glass fiber reinforced plastic material to a temperature of 650 to 750°C in the presence of oxygen (7) and steam (6) to gasify the plastic component thereof and a recovery zone for recovering the glass fibers remaining as a result of the heating; a plastic gas decomposition furnace (2) connected to said gasification furnace (1) and disposed for partially oxidizing the plastic gas introduced from said gasification furnace (1) at a temperature of 700 to 1,000°C in the presence of additional oxygen (7) or an additional mixture of oxygen and steam (6); and a gas purification column (4) for purifying the gas produced in said decomposition furnace (2) to recover CO and $H_2$.

**Patentansprüche**

1. Verfahren zum Vergasen von glasfaserverstärkten Kunststoffen,

   mit dem ersten Schritt: Zuführen eines glasfaserverstärkten Kunststoffmaterials zu einem Vergasungsteil, Erwärmen des Materials auf eine Temperatur zwischen 650 und 750 °C bei Anwesenheit von Sauerstoff und Wasserdampf zum Vergasen seines Kunststoffanteils, und Rückgewinnen der verbleibenden Glasfasern, und dem zweiten Schritt: Einleiten des sich ergebenden Kunststoffgases in einen Kunststoffgaszersetzungsteil, teilweises Oxidieren des Kunststoffgases bei Anwesenheit von zusätzlichem Sauerstoff oder einem zusätzlichen Gemisch aus Sauerstoff und Wasserdampf, und Rückgewinnen des so erzeugten CO und $H_2$.

2. Vorrichtung zum Vergasen von glasfaserverstärkten Kunststoffen, mit einem Vergasungsofen (1), der eine waagerecht angeordnete, drehbare, zylindrische Struktur und eine Erwärmungszone zum Erwärmen eines glasfaserverstärkten Kunststoffmaterials auf eine Temperatur zwischen 650 und 750 °C bei Anwesenheit von Sauerstoff (7) und Wasserdampf (6) zum Vergasen seines Kunststoffanteils und eine Rückgewinnungszone zum Rückgewinnen der nach dem Erwärmen verbleibenden Glasfasern umfaßt, einem Kunststoffgaszersetzungsöfen (2), der mit dem Vergasungsofen (1) verbunden und zum teilweisen Oxidieren des vom Vergasungsofen (1) her eingeleiteten Kunststoffgases bei einer Temperatur zwischen 700 und 1000 °C bei Anwesenheit von zusätzlichem Sauerstoff (7) oder einem zusätzlichen Gemisch aus Sauerstoff und Wasserdampf (6) ausgelegt ist, und einer Gasreinigungskolonne (4) zum Reinigen des im Zersetzungsofen (2) erzeugten Gases zum Rückgewinnen von CO und $H_2$.

**Revendications**

1. Procédé de gazéification de matières synthétiques renforcées de fibres de verre qui comprend une première étape consistant à alimenter en matière synthétique renforcée de fibres de verre un poste de gazéification, chauffer la matière à une température de 650 à 750 °C en présence d'oxygène et de vapeur pour gazéifier le composant synthétique qu'elle contient, et récupérer les fibres de verre restantes; et une deuxième étape consistant à introduire le gaz de matière synthétique résultant dans un poste de décomposition de gaz de matière synthétique, oxyder partiellement le gaz de matière synthétique en présence d'oxygène additionnel ou d'un mélange additionnel d'oxygène et de vapeur, et récupérer le CO et le $H_2$ ainsi produits.

2. Dispositif pour la gazéification de matières synthétiques renforcées de fibres de verre qui comprend un four de gazéification (1) se composant d'une structure cylindrique rotative disposée horizontalement et ayant une zone de chauffage pour chauffer une matière synthétique renforcée de fibres de verre à une température de 650 à 750 °C en présence d'oxygène (7) et de vapeur (6) pour gazéifier le composant synthétique qu'elle contient et une zone de récupération pour récupérer les fibres de verre restantes résultant du chauffage; un four de décomposition de gaz de matière synthétique (2) relié audit four de gazéification (1) et conçu pour oxyder partiellement le gaz de matière synthétique introduit en provenance dudit four de gazéification (1) à une température de 700 à 1.000 °C en présence d'oxygène additionnel (7) ou d'un mélange additionnel d'oxygène et de vapeur (6); et une colonne de purification de gaz (4) pour épurer le gaz produit dans ledit four de décomposition (2) pour récupérer le CO et le $H_2$.

FIG.1

F I G. 2